# FASCICULE DE BREVET EUROPEEN

(11) **EP 2 751 910 B1**
(45) Date de publication et mention de la délivrance du brevet: **24.11.2021**
(21) Numéro de dépôt: 12773120.6
(22) Date de dépôt: 28.08.2012
(51) Int. Cl.: H02K 9/04, H02K 19/38, F04D 27/00

(54) **MACHINE ELECTRIQUE A REFROIDISSEMENT AMELIORE**
ELEKTRISCHE MASCHINE MIT VERBESSERTER KÜHLUNG
ELECTRIC MACHINE WITH IMPROVED COOLING

(30) Priorité: 30.08.2011 FR 1157634
(43) Date de publication de la demande: 09.07.2014
(73) Titulaire: Moteurs Leroy-Somer, 16000 Angoulême (FR)
(72) Inventeur: VOHLGEMUTH, Patrick, F-16110 La Rochefoucauld (FR)
(74) Mandataire: Nony
(86) Numéro de dépôt international: PCT/IB2012/054413
(87) Numéro de publication internationale: WO 2013/030767

(56) Documents cités:
- EP-A1- 1 024 295
- DE-A1-102009 000 591
- DE-B- 1 134 453
- US-A- 3 670 190
- US-A- 4 482 830

## Description

La présente invention concerne les machines électriques tournantes et plus particulièrement celles refroidies au moyen d'un ventilateur intégré à la machine.

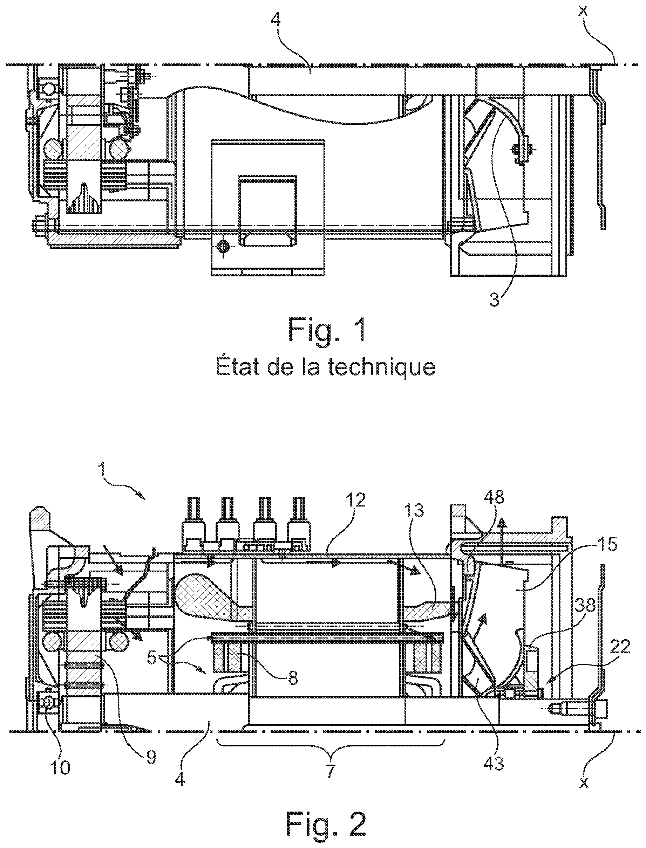

Classiquement, sur certaines machines électriques tournantes, les ventilateurs sont solidaires de la partie tournante de la machine, appelée rotor, et en conséquence ont une vitesse de rotation identique à celle de l'arbre. La figure 1 représente une machine de ce type, en demi-coupe longitudinale. Le ventilateur 3 est fixé directement sur l'arbre 4, qui tourne autour d'un axe de rotation X.

Une autre solution, moins répandue, consiste à raccorder une ventilation forcée en amont ou en aval d'un circuit de refroidissement de la machine.

Dans le cas classique d'un ventilateur solidaire du rotor, comme illustré à la figure 1, la vitesse de rotation du rotor est fixe et correspond à la vitesse de rotation nominale lorsque la machine est un alternateur dont le rotor est entraîné à vitesse constante. Le ventilateur est dimensionné pour évacuer les pertes de la machine en cas de charge maximale. De ce fait, le débit et les pertes mécaniques du ventilateur sont constants et indépendants du besoin réel en refroidissement de la machine.

Dans le cas d'une ventilation forcée externe, le débit de la ventilation peut être ajusté au besoin réel des calories à évacuer dans la machine. Par contre, le fait que la source de ventilation soit externe à la machine rend difficile l'orientation et le guidage du flux d'air à travers la machine. Il devient quasiment indispensable d'installer des déflecteurs internes pour concentrer le flux d'air sur les points chauds. Cette solution conduit à augmenter notablement l'encombrement extérieur et le coût de la machine.

La demande DE 10 2009 000591 divulgue une machine électrique tournante comportant un moteur électrique entraînant un ventilateur. Le ventilateur n'est pas porté par l'arbre du rotor.

La demande EP 1 024 295 divulgue un limiteur de couple à friction qui permet de modifier la vitesse de rotation d'un ventilateur.

Le brevet US 3 670 190 divulgue l'utilisation d'un système à engrenages pour entraîner un ventilateur.

Le brevet US 4 482 830 divulgue une machine électrique tournante comportant un ventilateur entraîné en rotation par un couplage électromagnétique.

Le brevet allemand DE 11 34 453 divulgue une machine DC tournante comportant un ventilateur entraîné en rotation par un moteur, ce dernier étant alimenté par le bobinage principal de la machine

L'invention vise à perfectionner encore les machines tournantes électriques, notamment afin de les refroidir au mieux.

L'invention a ainsi pour objet une machine électrique tournante selon la revendication 1, comportant :
- un arbre de rotor tournant autour d'un axe, et
- un ventilateur porté par l'arbre du rotor, la machine comportant un moteur d'entraînement du ventilateur permettant de moduler la vitesse de rotation relative du ventilateur par rapport à l'arbre, le ventilateur étant lié à l'arbre du rotor par une liaison motorisée obtenue à l'aide de ce moteur, la liaison motorisée comportant le moteur d'entraînement, la machine étant un alternateur et comportant un induit d'excitatrice porté par le rotor, l'induit d'excitatrice étant destiné à alimenter le rotor de l'alternateur en courant continue et le moteur d'entraînement du ventilateur étant alimenté par l'induit d'excitatrice.

Grâce à l'invention, le ventilateur se trouve au cœur de la machine pour assurer un refroidissement optimal, mais sa vitesse de rotation n'est pas obligatoirement égale à la vitesse de l'arbre, pouvant être plus ou moins grande, en fonction du sens et de la vitesse de rotation de son moteur. De cette manière, il devient possible d'ajuster le débit du ventilateur au besoin de refroidissement réel de la machine.

Grâce à ce système, en augmentant la vitesse de rotation du ventilateur, il est possible d'extraire plus de calories et donc augmenter la puissance massique de la machine. La vitesse de rotation du ventilateur peut être asservie à la puissance demandée à la machine.

Le sens et la vitesse de rotation du ventilateur peuvent être asservis à la puissance de sortie de la machine afin d'optimiser le rendement global de l'installation. Il est préférable de tourner dans le même sens. La vitesse de rotation du ventilateur peut être pilotée en fonction de la température d'au moins un bobinage de la machine, afin de garantir un refroidissement optimal dans la classe d'échauffement choisie.

La liaison motorisée comporte le moteur d'entraînement du ventilateur. La machine est un alternateur et le moteur d'entraînement du ventilateur est alimenté par un induit d'excitatrice porté par le rotor.

Le rotor peut comporter un circuit électronique pour contrôler la vitesse du moteur d'entraînement du ventilateur. Le rotor peut comporter un capteur de température d'un bobinage du rotor et le circuit électronique recevoir un signal de ce capteur, la modulation de la vitesse du ventilateur s'effectuant en fonction de la température mesurée.

Le ventilateur peut comporter des pales solidaires d'une jupe tubulaire portant des aimants permanents.

Le ventilateur peut être disposé à l'intérieur d'un carter de la machine, la distance axiale entre une partie principale du rotor et le ventilateur étant inférieure à l'encombrement axial du ventilateur.

La machine peut comporter un mécanisme de sécurité qui amène le ventilateur à tourner avec l'arbre du rotor indépendamment de la motorisation de la liaison entre le ventilateur et l'arbre du rotor, lorsqu'une condition prédéfinie est satisfaite, notamment une défaillance de la liaison motorisée ou de l'électronique de commande.

L'invention a encore pour objet un procédé de refroidissement d'une machine électrique tournante selon l'invention, le ventilateur étant entraîné en rotation avec une vitesse variable par rapport à l'arbre du rotor, en fonction du besoin de refroidissement de la machine.

L'invention pourra être mieux comprise à la lecture de la description détaillée qui va suivre, d'un exemple de mise en œuvre non limitatif de celle-ci, et à l'examen du dessin annexé, sur lequel :
- la figure 1, précédemment décrite, représente une machine électrique tournante réalisée conformément à l'art antérieur,
- la figure 2 est une vue analogue à la figure 1 d'une machine réalisée conformément à l'invention,
- la figure 3 représente un détail de la figure 2, et
- la figure 4 est un schéma en blocs d'un exemple de circuit électronique de pilotage du moteur d'entraînement du ventilateur.

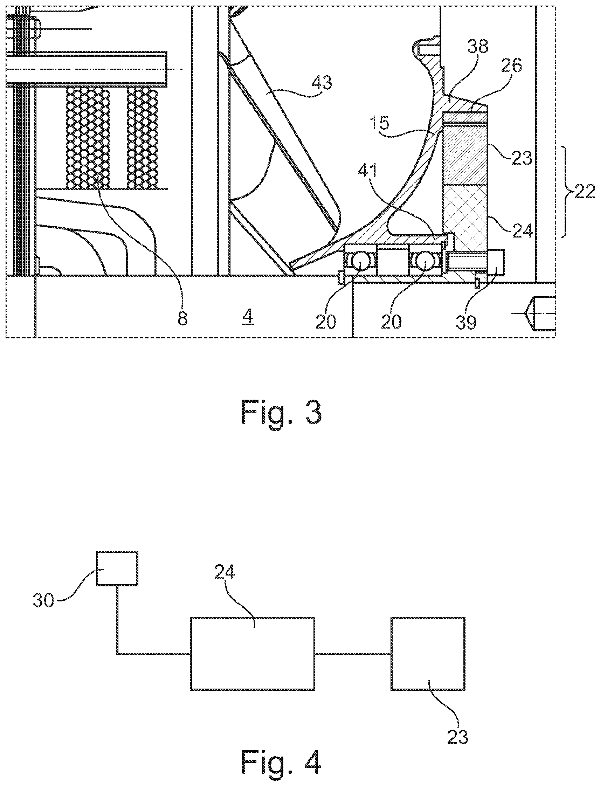

La machine électrique tournante 1 représentée aux figures 2 et 3 est un alternateur. La description qui suit vaut pour tous les types de machines.

Dans l'exemple de la figure 2, le rotor 5 de la machine 1 comporte une partie principale 7 comportant la roue polaire 8, et comporte également d'un côté de la partie principale 7 un induit d'excitatrice 9.

L'arbre 4 est soutenu par des roulements 10, présents par exemple aux extrémités de la machine 1. Cette dernière comporte un carter 12 qui loge le stator 13, lequel peut être conventionnel.

Les roulements prévus pour maintenir l'arbre 4 et le guider en rotation autour de son axe longitudinal peuvent être internes ou externes au carter 12.

Un ventilateur 15 est porté par l'arbre 4, du côté de la partie principale 7, qui est à l'opposé de l'induit d'excitatrice 9.

Le ventilateur 15 est assemblé sur l'arbre 4 du rotor de la machine par l'intermédiaire de roulements 20. Il est entraîné en rotation par un moteur électrique 22, de préférence de type DC brushless, par exemple à cage tournante 26 à aimants permanents.

Le ventilateur 15 peut être réalisé, par exemple par moulage, avec une jupe tubulaire 38 concentrique à l'axe X, sur la face radialement intérieure de laquelle sont fixés les aimants 26.

Un circuit magnétique stator 23 est solidaire de l'arbre 4 et ses bobinages sont alimentés par un circuit électronique 24, dont les composants sont par exemple présents sur une carte de circuit imprimé fixée sur l'arbre 4, par exemple par des vis 39, radialement en deçà des bobinages 23.

L'alimentation électrique du moteur 22 est avantageusement prélevée à la sortie de l'induit d'excitatrice 9 de l'alternateur. En effet, pour des raisons de capacité à assurer des surcharges transitoires, l'induit d'excitatrice destiné à alimenter le rotor de l'alternateur en courant continu est généralement capable de délivrer une puissance très supérieure au besoin permanent du rotor.

Le fonctionnement du moteur 22 d'entraînement du ventilateur 15 peut être autonome, c'est-à-dire que le ventilateur 15 tourne dans un sens et une vitesse qui sont déterminés par le circuit électrique 24 en fonction de paramètres internes à la machine 1, et non de signaux provenant de l'extérieur de la machine.

En variante, le rotor reçoit des signaux de commande, par exemple d'un régulateur de tension, qui contrôlent le fonctionnement du moteur 22, ces signaux étant par exemple transmis par une liaison sans fil entre le rotor et le stator.

En cas de fonctionnement autonome notamment, le moteur 22 peut être asservi au besoin de refroidissement de la machine, déterminé par exemple par une mesure de température.

Dans l'exemple illustré, le ventilateur 15 se situe à proximité immédiate de la roue polaire 8 de l'alternateur. Il est donc aisé de placer un capteur de température 30 sur les bobinages de la roue polaire 8 et de faire en sorte que cette information soit prise en compte par le circuit électronique 24 de pilotage du ventilateur pour optimiser sa vitesse de rotation.

Le flux d'air généré par la rotation du ventilateur 15 s'écoule dans l'entrefer. Le ventilateur 15 peut comporter une lèvre annulaire 48 qui tourne à une faible distance du carter pour assurer que l'air circule préférentiellement par les passages formés entre les pales. Les flux d'air ont été matérialisés par des flèches sur la figure 2.

Le fait que le ventilateur soit à proximité immédiate de la partie principale 7 du rotor de la machine laisse un grand nombre de possibilités pour sécuriser la ventilation en cas de défaillance du circuit électronique de pilotage du ventilateur. Un dispositif électromécanique simple, par exemple à manque de courant, peut avantageusement être prévu pour resynchroniser automatiquement le ventilateur avec l'arbre en cas de dysfonctionnement du moteur 22 du ventilateur.

Dans le cas d'une motorisation du ventilateur par un moteur type brushless DC, on peut dimensionner le circuit magnétique de telle sorte que l'accrochage magnétique entre les aimants et le stator soit suffisant pour assurer l'entrainement du ventilateur en cas de coupure d'alimentation.

Le cas échéant, on prévoit deux tels ventilateurs, l'un à l'avant, l'autre à l'arrière, l'entrée d'air se faisant par le milieu de la machine et les ventilateurs éjectant l'air aux extrémités.

L'invention n'est pas limitée à l'exemple qui vient d'être décrit, mais aux caractéristiques revendiquées.

L'expression « comportant un » doit se comprendre comme signifiant « comportant au moins un ».

## Revendications

1. Machine électrique (1) tournante, comportant:
- un rotor (5) comportant un arbre (4) de rotor tournant autour d'un axe (X), et
- un ventilateur (15) porté par l'arbre (4) du rotor (5), la machine (1) comportant un moteur d'entraînement (22) du ventilateur (15) permettant de moduler la vitesse de rotation relative du ventilateur (15) par rapport à l'arbre (4) du rotor (5), le ventilateur (15) étant lié à l'arbre (4) du rotor par une liaison motorisée obtenue à l'aide de ce moteur (22), la liaison motorisée comportant le moteur d'entraînement (22), la machine (1) est **caractérisée par le fait qu'**il s'agit d'un alternateur et qu'elle comporte un induit d'excitatrice (9) porté par le rotor (5), l'induit d'excitatrice (9) étant destiné à alimenter le rotor (5) de l'alternateur en courant continu, et le moteur d'entraînement (22) du ventilateur (15) étant alimenté par l'induit d'excitatrice (9).

2. Machine selon la revendication 1, le rotor comportant un circuit électronique (24) pour contrôler la vitesse du moteur (22) d'entraînement du ventilateur (15).

3. Machine selon la revendication 1 ou 2, le rotor comportant un capteur de température (30) d'un bobinage du rotor et le circuit électronique (24) recevant un signal de ce capteur (30), la modulation de la vitesse du ventilateur s'effectuant en fonction de la température mesurée.

4. Machine selon la revendication 2 ou 3, le moteur d'entraînement (22) comportant un stator ayant un circuit magnétique stator (23) solidaire de l'arbre (4) de rotor et les bobinages du circuit magnétique stator (23) étant alimentés par le circuit électronique (24).

5. Machine électrique tournante selon 1 à 4, le ventilateur (15) comportant des pales solidaires d'une jupe tubulaire (38) portant des aimants permanents (26).

6. Machine selon l'une quelconque des revendications 1 à 5, le ventilateur (15) étant disposé à l'intérieur d'un carter (12) de la machine, la distance axiale entre une partie principale (7) du rotor et le ventilateur (15) étant inférieure à l'encombrement axial du ventilateur.

7. Machine selon l'une quelconque des revendications 1 à 6, la vitesse de rotation du ventilateur (15) étant asservie à la puissance demandée à la machine.

8. Machine selon l'une quelconque des revendications 1 à 7, la machine comportant un mécanisme de sécurité qui amène le ventilateur (15) à tourner avec l'arbre (4) du rotor (5) indépendamment de la motorisation de la liaison entre le ventilateur et l'arbre (4) du rotor (5), lorsqu'une condition prédéfinie est satisfaite, notamment une défaillance de la liaison motorisée.

9. Procédé de refroidissement d'une machine électrique (1) tournante telle que définie dans l'une quelconque des revendications 1 à 8, le ventilateur (15) étant entraîné en rotation avec une vitesse variable par rapport à l'arbre (4) du rotor (5), en fonction du besoin de refroidissement de la machine (1).

## Patentansprüche

1. Rotierende elektrische Maschine (1), welche aufweist:
- einen Rotor (5), der eine Rotorwelle (4) aufweist, die um eine Achse (X) rotiert, und
- einen Lüfter (15), der von der Welle (4) des Rotors (5) getragen wird,
wobei die Maschine (1) einen Antriebsmotor (22) des Lüfters (15) aufweist, der es ermöglicht, die relative Drehzahl des Lüfters (15) in Bezug auf die Welle (4) des Rotors (5) zu modulieren,
wobei der Lüfter (15) mit der Welle (4) des Rotors durch eine motorisierte Verbindung verbunden ist, die mithilfe dieses Motors (22) erhalten wird, wobei die motorisierte Verbindung den Antriebsmotor (22) aufweist,
wobei die Maschine (1) **dadurch gekennzeichnet ist, dass** es sich um einen Wechselstromgenerator handelt und dass sie einen Erregeranker (9) aufweist, der von dem Rotor (5) getragen wird, wobei der Erregeranker (9) dazu bestimmt ist, den Rotor (5) des Wechselstromgenerators mit Gleichstrom zu speisen,
und wobei der Antriebsmotor (22) des Lüfters (15) von dem Erregeranker (9) gespeist wird.

2. Maschine nach Anspruch 1, wobei der Rotor eine elektronische Schaltung (24) zum Steuern der Drehzahl des Antriebsmotors (22) des Lüfters (15) aufweist.

3. Maschine nach Anspruch 1 oder 2, wobei der Rotor einen Sensor (30) für die Temperatur einer Wicklung des Rotors aufweist und die elektronische Schaltung (24) ein Signal dieses Sensors (30) empfängt, wobei die Modulation der Drehzahl des Lüfters in Abhängigkeit von der gemessenen Temperatur erfolgt.

4. Maschine nach Anspruch 2 oder 3, wobei der Antriebsmotor (22) einen Stator mit einem mit der Rotorwelle (4) fest verbundenen Statormagnetkreis (23) aufweist und die Wicklungen des Statormagnetkreises (23) von der elektronischen Schaltung (24) gespeist werden.

5. Rotierende elektrische Maschine nach einem der Ansprüche 1 bis 4, wobei der Lüfter (15) Flügel aufweist, die mit einer rohrförmigen Schürze (38) fest verbunden sind, die Permanentmagnete (26) trägt.

6. Maschine nach einem der Ansprüche 1 bis 5, wobei der Lüfter (15) im Inneren eines Gehäuses (12) der Maschine angeordnet ist, wobei der axiale Abstand zwischen einem Hauptteil (7) des Rotors und dem Lüfter (15) kleiner als die axiale Abmessung des Lüfters ist.

7. Maschine nach einem der Ansprüche 1 bis 6, wobei die Drehzahl des Lüfters (15) der angeforderten Leistung der Maschine nachgeführt wird.

8. Maschine nach einem der Ansprüche 1 bis 7, wobei die Maschine einen Sicherheitsmechanismus aufweist, welcher bewirkt, dass der Lüfter (15) mit der Welle (4) des Rotors (5) unabhängig von der Motorisierung der Verbindung zwischen dem Lüfter und der Welle (4) des Rotors (5) rotiert, wenn eine vordefinierte Bedingung erfüllt ist insbesondere ein Ausfall der motorisierten Verbindung.

9. Verfahren zur Kühlung einer rotierenden elektrischen Maschine (1), wie in einem der Ansprüche 1 bis 8 definiert, wobei der Lüfter (15) in Abhängigkeit vom Kühlbedarf der Maschine (1) mit einer variablen Drehzahl in Bezug auf die Welle (4) des Rotors (5) drehend angetrieben wird.

## Claims

1. An electrical rotating machine (1) comprising:
- a rotor (5) comprising a rotor shaft (4) rotating about an axis (X), and
- a fan (15) supported by the shaft (4) of the rotor (5),
the machine comprising a motor (22) for driving the fan (15), making it possible to modulate the relative rotation speed of the fan (15) with respect to the shaft (4) of the rotor (5),
the fan (15) being connected to the rotor shaft (4) via a motorized connection obtained with the aid of this motor (22), the motorized connection comprising the motor (22) for driving the fan, the machine being **characterized in that** the machine is an alternator and comprises an exciting armature (9) supported by the rotor (5), the exciting armature (9) being designed to power the rotor (5) of the alternator with DC current, the motor (22) for driving the fan (15) being powered by the exciting armature (9).

2. The machine as claimed in claim 1, the rotor comprising an electronic circuit (24) for controlling the speed of the motor (22) for driving the fan (15).

3. The machine as claimed in claim 1 or 2, the rotor comprising a temperature sensor (30) for sensing the temperature of a winding of the rotor and the electronic circuit (24) receiving a signal from this sensor (30), the fan speed being modulated as a function of the measured temperature.

4. The electrical rotating machine as claimed in claim 2 or 3, the motor (22) for driving the fan comprising a stator having a stator magnetic circuit (23) secured to the rotor shaft (4) and the windings of the stator magnetic circuit (23) being powered by the electronic circuit (24).

5. The electrical rotating machine as claimed in any one of claims 1 to 4, the fan (15) comprising blades secured to a tubular skirt (38) supporting permanent magnets (26).

6. The machine as claimed in any one of the claims 1 to 5, the fan (15) being placed inside a casing (12) of the machine, the axial distance between a main portion (7) of the rotor and the fan (15) being less than the axial space requirement of the fan.

7. The machine as claimed in any one of claims 1 to 6, the rotation speed of the fan (15) being slaved to the power demanded of the machine.

8. The machine as claimed in any one of claims 1 to 7, comprising a safety mechanism which causes the fan (15) to rotate with the shaft (4) of the rotor (5) independently of the motorization of the connection between the fan and the shaft (4) of the rotor (5), when a predefined condition is satisfied, notably a failure of the motorized connection.

9. A method for cooling an electrical rotating machine as defined in any one of claims 1 to 8, the fan (15) being rotated at a variable speed relative to the shaft (4) of the rotor (5) depending on the cooling requirement of the machine (1).
